# FASCICULE DE BREVET EUROPEEN

(11) **EP 3 110 080 B1**
(45) Date de publication et mention de la délivrance du brevet: **29.07.2020**
(21) Numéro de dépôt: 16175132.6
(22) Date de dépôt: 17.06.2016
(51) Int. Cl.: H04L 12/58

(54) **PROCÉDÉ ET DISPOSITIF DE TRAITEMENT DE MESSAGES ÉCHANGÉS ENTRE DES UTILISATEURS**
VERFAHREN UND VORRICHTUNG ZUR VERARBEITUNG VON ZWISCHEN BENUTZERN AUSGETAUSCHTEN NACHRICHTEN
METHOD AND DEVICE FOR PROCESSING MESSAGES EXCHANGED BETWEEN USERS

(30) Priorité: 25.06.2015 FR 1555867
(43) Date de publication de la demande: 28.12.2016
(73) Titulaire: ORANGE, 75015 Paris (FR)
(72) Inventeur: TOUTAIN, François, 22300 LANNION (FR); FLOURY, Cédric, 22700 Perros Guirec (FR)
(74) Mandataire: Cabinet Beau de Loménie

(56) Documents cités:
- EP-A1- 2 381 402
- WO-A1-02/087270
- US-A1- 2006 128 404
- US-A1- 2014 143 684

## Description

### Arrière-plan de l'invention

L'invention se rapporte au domaine général des télécommunications.

Elle concerne plus particulièrement un procédé de traitement de messages échangés entre un premier utilisateur et au moins un deuxième utilisateur, ces messages pouvant contenir tout type de contenus multimédia, comme par exemple du texte, une image, une vidéo, etc. Ainsi, l'invention s'applique de façon privilégiée mais non limitative aux messages courts de type SMS (Short Message Service), de messages multimédia de type MMS (Multimedia Messaging Service) ou encore de messages électroniques (méls ou messages échangés dans le cadre de messagerie instantanée).

La démocratisation des téléphones intelligents et des tablettes numériques fait que le nombre de messages échangés aujourd'hui par les utilisateurs de tels équipements est relativement élevé. Il n'est pas toujours évident pour ces utilisateurs d'organiser les messages qu'ils reçoivent et notamment de pouvoir suivre le fil d'une conversation compte tenu de la multitude de messages reçus.

Le document US 2014/0143684 propose un procédé permettant, par l'intermédiaire d'une interface graphique, d'organiser des messages reçus et émis par un utilisateur via un terminal, et plus particulièrement de pouvoir les réarranger en fonction d'informations contextuelles associées à ces messages. Selon ce procédé, l'utilisateur sélectionne un message sur son écran ; tout nouveau message composé par l'utilisateur alors que cette sélection est activée est lié par un lien contextuel apparaissant à l'écran au message sélectionné. Ce procédé permet à l'utilisateur d'identifier aisément sur son écran les messages reçus et émis liés entre eux. Le document WO 02/087270 A1 divulgue un dispositif de messagerie textuelle pour téléphone mobile doté d'un afficheur intégré rendu sur un écran d'affichage.

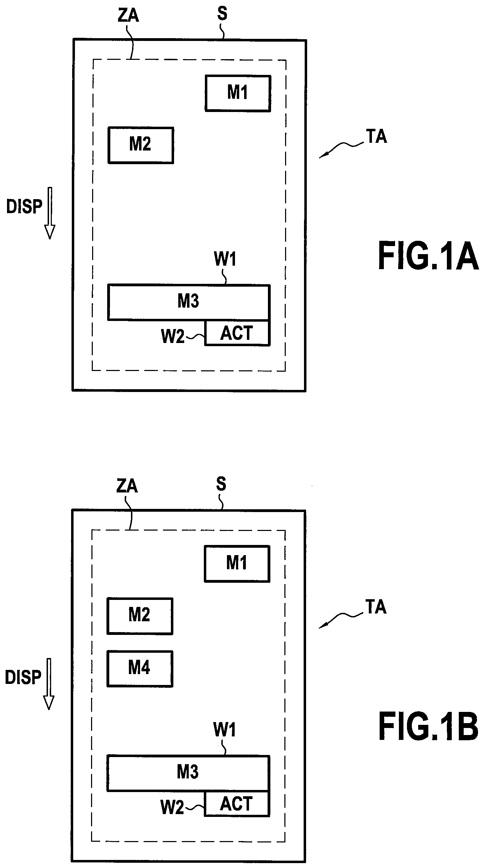

Bien que facilitant le repérage de l'utilisateur parmi ses messages, et notamment parmi les plus anciens stockés sur son terminal, le procédé décrit dans le document US 2014/0143684 ne s'intéresse pas à la problématique des messages croisés. Il arrive en effet que lors de la rédaction (composition) d'un message par un utilisateur A à destination d'un utilisateur B, l'utilisateur B envoie également un message à l'utilisateur A. Les **figures 1A et 1B** illustrent une telle situation.

On suppose dans l'exemple illustré sur la figure 1A que deux utilisateurs A et B s'échangent des messages dans le cadre d'une suite de messages comprenant plusieurs messages liés entre eux par un mécanisme de réponse à un message précédemment reçu. Les messages échangés au cours de cette suite de messages s'affichent dans une zone d'affichage ZA prévue à cet effet sur l'écran S d'un terminal TA de l'utilisateur A, dans l'ordre chronologique de leur instant d'envoi ou de réception par le terminal TA.

Ainsi, dans l'exemple illustré à la figure 1A on suppose par exemple que l'utilisateur A a envoyé à l'utilisateur B un message M1 = « Salut ça va ? » auquel a répondu l'utilisateur B par un message M2 = « Super, alors ce match ? ». Le message M1, émis en premier par l'utilisateur A, s'affiche en premier par rapport au sens d'affichage DISP des messages échangés dans le cadre de la suite de messages entre A et B. Le message M2, reçu par le terminal TA après l'émission du message M1, est affiché après le message M1 selon la direction DISP (c'est-à-dire en dessous du message M1 ici).

Comme illustré maintenant à la figure 1B, suite à la réception du message M2, l'utilisateur A compose, dans une fenêtre de composition W1 prévue à cet effet dans la zone d'affichage ZA, un message M3 en réponse au message M2. La fenêtre de composition W1 est associée à une fenêtre W2 dans laquelle est présentée une action ACT (ACT=« Envoyer » ici) pouvant être validée à tout moment par l'utilisateur A et permettant à celui-ci d'envoyer le message M3 à l'utilisateur B.

On suppose sur la figure 1B, qu'alors que l'utilisateur A est en train de composer le message M3, un message M4 arrive en provenance de l'utilisateur B. Par exemple, M4 = « Tu as pu y aller finalement ? ». Ce message M4 est affiché conformément aux techniques existantes de l'état de l'art dans la zone d'affichage ZA, après le message M2, alors que le message M3 en cours de rédaction est toujours présent dans la fenêtre de composition W1. Dès lors, il devient difficile avec les techniques existant aujourd'hui de conserver pour l'utilisateur A une chronologie cohérente de la rédaction des messages sur son terminal.

### Objet et résumé de l'invention

La présente invention vise à améliorer notamment cette situation en proposant un procédé de traitement de messages échangés entre un premier utilisateur et au moins un deuxième utilisateur, comme décrit dans la revendication 1.

Corrélativement, l'invention vise aussi un dispositif de traitement de messages échangés entre un premier utilisateur et au moins un deuxième utilisateur, comme décrit dans la revendication 9.

Ce procédé (respectivement ce dispositif) est mis en œuvre par exemple par l'interface graphique équipant le terminal du premier utilisateur et gérant l'affichage des messages qu'il échange avec d'autres utilisateurs. Aucune limitation n'est attachée à la nature de l'application de messagerie considérée pour l'échange de ces messages ni aux contenus véhiculés par ces messages. Il peut s'agir de messages de type SMS ou MMS, de messages échangés dans le cadre d'une application de messagerie électronique ou de messagerie instantanée, etc., véhiculant tout type de contenu multimédia (texte, image, vidéo, hyperliens, etc.).

Ainsi, conformément à l'invention, lorsqu'un premier utilisateur reçoit un message (deuxième message au sens de l'invention) d'un deuxième utilisateur alors qu'il est en train d'en rédiger un autre message (premier message au sens de l'invention), le message en cours de rédaction est scindé automatiquement en deux parties : d'une part, la partie déjà rédigée par l'utilisateur mais non encore envoyée au deuxième utilisateur (désignée par premier message), et d'autre part, la partie à venir non encore rédigée par le premier utilisateur (désignée par troisième message) et destinée à faire suite à la partie rédigée avant la réception du deuxième message. La partie déjà rédigée désignée par premier message et le deuxième message reçu du deuxième utilisateur sont alors présentés au premier utilisateur dans la zone d'affichage de l'écran du terminal (en dehors de la fenêtre de composition) : ceci permet d'informer le premier utilisateur de la réception concomitante d'un message en relation avec celui qu'il est en train de rédiger, et d'attirer son attention sur le contenu des deux messages. Différentes actions sont en outre offertes au premier utilisateur sur ces deux messages, de sorte à lui permettre de contrôler l'affichage de ces messages sur son écran.

Ainsi, par exemple, ladite au moins une action prédéterminée associée au premier message comprend l'annulation du premier message et l'envoi du premier message audit au moins un deuxième utilisateur.

Le premier utilisateur a ainsi le choix d'annuler l'envoi du premier message dont la rédaction a été interrompue par la réception du deuxième message, par exemple parce qu'il le considère comme caduc ou inapproprié au regard du deuxième message reçu du deuxième utilisateur. Il peut au contraire décider d'envoyer malgré tout ce premier message au deuxième utilisateur en dépit du contenu du deuxième message déjà reçu.

Préférentiellement, lors de l'étape d'affichage, le premier message est affiché avec ladite au moins une action qui lui est associée avant le deuxième message et ladite au moins une action qui lui est associée par rapport à un sens d'affichage d'une suite de messages échangés entre le premier utilisateur et ledit au moins un deuxième utilisateur. Ainsi de cette sorte, l'ordre chronologique de composition et de réception des messages est conservé pour le premier utilisateur.

Selon un autre exemple, ladite au moins une action prédéterminée associée au deuxième message comprend un affichage du deuxième message dans la zone d'affichage en dehors de la fenêtre de composition et un affichage du premier message dans la fenêtre de composition de sorte à permettre au premier utilisateur de finaliser (i.e. terminer) la composition du premier message.

Le premier utilisateur a ainsi la possibilité de remonter le deuxième message reçu du deuxième utilisateur dans la chronologie des messages, et d'achever la composition du premier message (éventuellement en ajustant le contenu du premier message) avant de l'afficher suite au deuxième message.

Les actions associées au premier et au deuxième message et affichées sur l'écran du terminal du premier utilisateur offrent ainsi la possibilité au premier utilisateur de conserver un affichage chronologique cohérent des messages entrants et sortants de son terminal en prenant également en compte les messages en cours de rédaction. L'invention offre par ce biais une grande flexibilité et une grande liberté au premier utilisateur pour l'affichage de messages croisés.

Il convient de noter que l'invention est parfaitement compatible avec les différentes technologies de messagerie existantes (SMS, MMS, messagerie instantanée, messagerie électronique, etc.) et requiert uniquement quelques développements complémentaires ou ajustements au niveau de l'interface graphique offerte au premier utilisateur sur son terminal.

Dans un mode particulier de réalisation le procédé comprend en outre :
- suite à l'interruption du premier message, une étape de composition dans la fenêtre de composition d'un troisième message par le premier utilisateur ; et
- une étape d'affichage d'une action associée au troisième message permettant l'envoi du premier message et du troisième message audit au moins un deuxième utilisateur.

Cette action, en combinaison avec les actions précédentes, permet au premier utilisateur de décider d'un envoi groupé du premier message et du troisième message au deuxième utilisateur.

Dans ce mode de réalisation, le procédé comprend, en réponse à une validation de l'action associée au troisième message par le premier utilisateur :
- le premier message peut être affiché sur l'écran en dehors de la fenêtre de composition et avant le deuxième message par rapport au sens d'affichage d'une suite de messages échangés entre le premier utilisateur et ledit au moins un deuxième utilisateur; et
- le troisième message peut être affiché sur l'écran en dehors de la fenêtre de composition après le deuxième message par rapport au sens d'affichage de la suite de messages.

La chronologie entre les messages est alors respectée lors de l'affichage en tenant compte des instants de rédaction et de réception des messages par le terminal.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en œuvre dans un dispositif de traitement ou plus généralement dans un ordinateur, ce programme comportant des instructions adaptées à la mise en œuvre des étapes d'un procédé de traitement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un terminal comprenant une interface graphique selon l'invention.

On peut également envisager, dans d'autres modes de réalisation, que le procédé de traitement, le dispositif de traitement, l'interface graphique, et le terminal selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A et 1B, déjà décrites, représentent une technique d'affichage de messages croisés de l'état de l'art ;
- la figure 2 représente un terminal équipé d'une interface graphique comprenant un dispositif de traitement de messages conforme à l'invention, dans un mode particulier de réalisation ;
- la figure 3 illustre l'architecture matérielle du terminal de la figure 2, dans un mode particulier de réalisation ;
- la figure 4 représente, sous forme d'ordinogramme, les principales étapes d'un procédé de traitement selon l'invention, telles qu'elles sont mises en œuvre par le dispositif de traitement de la figure 2 ;
- les figures 5A et 5B illustrent l'affichage de différentes actions offertes à l'utilisateur du terminal de la figure 2 pour la gestion de messages croisés conformément à l'invention ;
- les figures 6A-6E illustrent le résultat de l'exécution de différentes actions offertes à l'utilisateur du terminal de la figure 2 pour la gestion de messages croisés conformément à l'invention.

### Description détaillée de l'invention

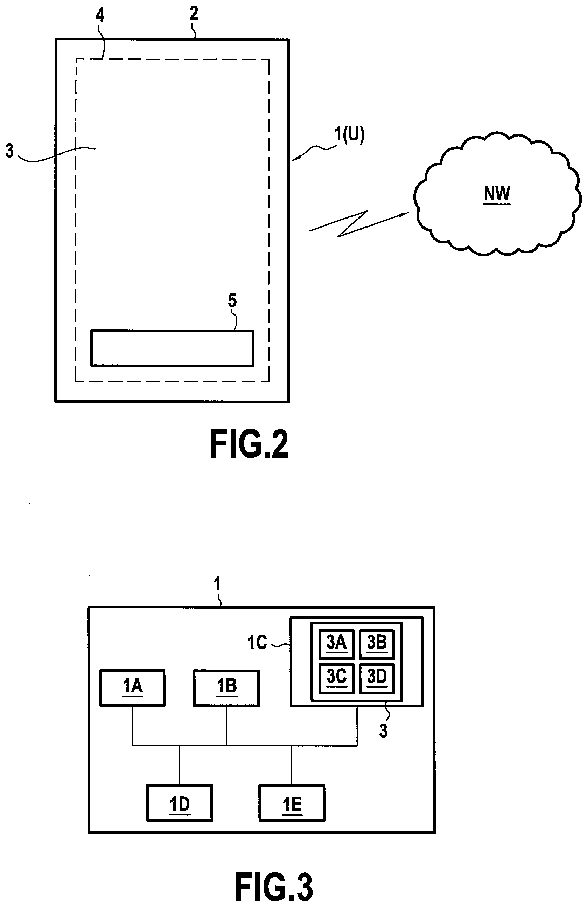

La **figure 2** représente, dans son environnement, un terminal 1 d'un utilisateur U1, équipé d'un écran 2 et conforme à l'invention, dans un mode particulier de réalisation.

Aucune limitation n'est attachée à la nature du terminal 1. Il peut s'agir par exemple d'un téléphone intelligent, d'une tablette numérique, d'un ordinateur portable, etc. dont l'utilisateur U1 a souscrit à un service de messagerie lui permettant d'échanger par l'intermédiaire de ce terminal des messages avec d'autres utilisateurs eux-mêmes équipés de terminaux, via un réseau de télécommunications NW.

Le service de messagerie auquel a souscrit l'utilisateur U1 peut être par exemple un service de messages de type SMS ou MMS, de messages électroniques (méls), de messages instantanés, etc. et véhiculer tout type de contenus multimédia (ex. texte, image, photo, vidéo, hyperlien, etc.).

Par ailleurs, aucune limitation n'est attachée à la nature du réseau de télécommunications NW (fixe ou mobile, filaire ou sans fil, public ou privé, etc.).

Ainsi à titre illustratif dans la suite de la description, on considère un service de messages de type SMS offert par un réseau de télécommunications mobile et le terminal 1 est un téléphone intelligent connecté à ce réseau.

Le terminal 1 dispose, dans le mode de réalisation décrit ici, de l'architecture matérielle d'un ordinateur, telle qu'illustrée schématiquement à la **figure 3****.** Il comprend notamment un processeur 1A, une mémoire vive 1B de type RAM (Random Access Memory), une mémoire morte 1C de type ROM (Read Only Memory), une mémoire non volatile réinscriptible 1D et un module de communication sur le réseau NW, connus en soi.

L'affichage des messages SMS échangés par l'utilisateur U1 avec d'autres utilisateurs U2, ..., UN, sur l'écran 2 du terminal 1 de l'utilisateur U1 est géré par une interface graphique 3 (c'est-à-dire un dispositif de dialogue homme-machine aussi appelée IHM pour Interface Homme Machine), conforme à l'invention. Cette interface graphique 3 est définie par un ou plusieurs modules logiciels inclus dans le système d'exploitation du terminal 1 et stockés ici dans la mémoire morte 1C du terminal 1. Cette interface graphique 3, outre les moyens classiques mis en œuvre par une interface graphique permettant l'affichage de messages SMS sur un terminal, comprend en outre un dispositif (logiciel) de traitement des messages conforme à l'invention, apte à mettre en œuvre les principales étapes d'un procédé de traitement selon l'invention.

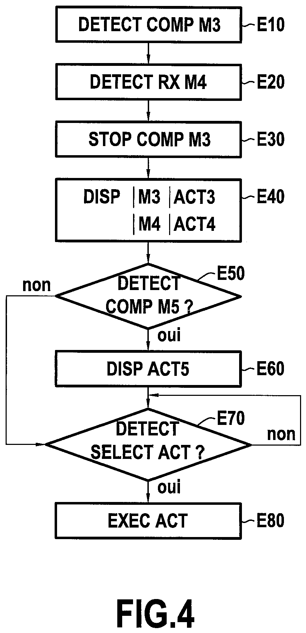

La mémoire morte 1C constitue donc un support d'enregistrement conforme à l'invention, lisible par le processeur 1A et sur lequel est enregistré un programme d'ordinateur comportant des instructions pour l'exécution des étapes d'un procédé de traitement selon l'invention. Ce programme d'ordinateur définit de façon équivalente des modules fonctionnels et logiciels de détection 3A-3B, d'interruption 3C et d'affichage 3D du dispositif de traitement et de l'interface graphique 3, décrits plus en détail ultérieurement en référence notamment aux figures 4 et suivantes.

On s'intéresse, dans le cadre de l'invention, à une suite de messages SMS échangés entre l'utilisateur U1 et au moins un autre utilisateur U2. Par souci de simplification, on suppose dans la suite de la description qu'un seul utilisateur U2 participe à cet échange de SMS avec l'utilisateur U1.

Selon l'exemple illustré à titre indicatif sur la figure 2, on se place en outre dans un contexte où au moins un message a déjà été échangé entre les utilisateurs U1 et U2 et où l'utilisateur U1 est en train de composer un message destiné à l'utilisateur U2 en réponse à un message précédemment reçu de ce dernier. Plus précisément, on considère selon cet exemple une suite de messages entre l'utilisateur U1 et U2 comprenant déjà un message M1 émis par l'utilisateur U1 à destination de l'utilisateur U2 (par exemple M1 = « Salut ça va ? », comme dans l'exemple illustré à la figure 1A) suivi d'un message M2 de réponse de l'utilisateur U2 au message M1 (par exemple M2 = « Super, alors ce match ? »). Les messages M1 et M2 déjà émis et reçus respectivement par le terminal 1 sont affichés de façon classique par l'interface graphique 3, via son module d'affichage 3D, dans la zone d'affichage 4, par exemple décalés l'un par rapport à l'autre et selon deux couleurs distinctes pour identifier facilement l'utilisateur à l'origine du message. De telles techniques d'affichage sont connues de l'homme du métier et non reprises en détail ici.

L'hypothèse de poursuite de conversation évoquée ci-dessus n'est toutefois pas limitative en soi. L'invention permet en effet de gérer des messages croisés y compris dans une situation où l'utilisateur U1 est en train de rédiger un premier message à l'attention de l'utilisateur U2. En d'autres mots, aucune limitation n'est attachée au nombre de messages compris dans la suite de messages échangés entre les deux utilisateurs, en particulier lorsque l'invention est appliquée, c'est-à-dire lorsqu'une situation de messages croisés se présente.

Pour permettre à l'utilisateur U1 de répondre au message M2 reçu de l'utilisateur U2, l'interface graphique 3 prévoit dans la zone d'affichage 4, une fenêtre 5 de composition de message, dans laquelle l'utilisateur U1 peut saisir son message M3 de réponse au message M2, par exemple sous la forme d'un texte entré via un clavier virtuel ou matériel équipant le terminal 1 ou sous la forme d'un contenu multimédia sélectionné par exemple parmi des contenus prédéfinis (ex. une photo ou une vidéo). Dans le mode de réalisation décrit ici, cette fenêtre 5 de composition est affichée dans la zone d'affichage 4 de façon concomitante avec les messages M1 et M2 déjà échangés avec l'utilisateur U2.

En variante, lorsqu'aucun message n'a encore été échangé entre les deux utilisateurs, la fenêtre de composition 5 peut être affichée dans une zone limitée de la zone d'affichage 4 ou occuper toute la zone d'affichage 4.

Comme mentionné précédemment, l'invention permet à l'utilisateur U1 de gérer des messages croisés échangés entre l'utilisateur U1 et un ou plusieurs utilisateurs U2, tout en gardant une chronologie cohérente de l'affichage de ces messages pour l'utilisateur U1 sur l'écran de son terminal 1. Cette gestion des messages croisés est permise conformément à l'invention grâce à la mise en oeuvre d'un procédé de traitement selon l'invention par l'interface graphique 3, dont les principales étapes sont représentées sous forme d'ordinogramme à la **figure 4****,** décrite maintenant.

On suppose donc que l'utilisateur U1 compose (ex. rédige), via son terminal 1, dans la fenêtre de composition 5 prévue par l'interface graphique 3, un message M3 de réponse au message M2 reçu de l'utilisateur U2 (premier message au sens de l'invention). La composition en cours de ce message M3 est détectée par le module de détection 3A de l'interface graphique 3 (étape E10), par exemple dès lors qu'un caractère est saisi par l'utilisateur U1 dans la fenêtre de composition 5 ou un contenu multimédia est inséré dans cette fenêtre.

On suppose par ailleurs qu'alors que l'utilisateur U1 est en train de composer son message M3, le module de détection 3B de l'interface graphique 3 détecte l'arrivée sur le terminal 1 d'un message M4 (par exemple M4= « Tu as pu y aller finalement ?») destiné à l'utilisateur U1 (deuxième message au sens de l'invention), en provenance de l'utilisateur U2, et émis par l'utilisateur U2 (étape E20). Cette détection peut être réalisée par exemple via un événement transmis par un automate de gestion des messages destinés à l'utilisateur U1 installé sur le terminal 1 et connu en soi.

En réponse à cette détection, le module d'interruption 3C de l'interface graphique 3 interrompt automatiquement la saisie du message M3 (étape E30), de sorte que le message M3 contient uniquement les éléments de contenu saisi par l'utilisateur U1 dans la fenêtre de composition 5 entre la détection opérée à l'étape E10 et la détection opérée à l'étape E20. Dès lors, l'utilisateur U1 peut toujours saisir une suite au contenu du message M3 dans la fenêtre de composition 5, mais toute nouvelle saisie par l'utilisateur U1 d'un contenu multimédia dans la fenêtre de composition 5 faisant suite à cette interruption déclenche la création d'un nouveau message M5 par l'interface graphique 3 (troisième message au sens de l'invention). Autrement dit, l'interruption mise en œuvre par le module d'interruption 3C consiste à scinder automatiquement la réponse de l'utilisateur U1 en deux parties : une première partie formant le message M3 et constituée des éléments saisis par l'utilisateur U1 avant la détection de l'arrivée du message M4, et une seconde partie formant un nouveau message et constituée des éléments saisis par l'utilisateur U1 post interruption.

Conformément à l'invention, l'interruption opérée par le module d'interruption 3C déclenche l'affichage par le module 3D du message M3 comprenant le contenu partiel (désigné ainsi du fait de son interruption soudaine) saisi par l'utilisateur U1 et du message M4 reçu de l'utilisateur U2 (étape E40). Ces messages sont affichés par le module d'affichage 3D de l'interface graphique dans la zone d'affichage 4 en dehors de la fenêtre de composition 5. En outre, conformément à l'invention lors de cet affichage :
- le message M3 est affiché en association avec au moins une action ACT3 offerte à l'utilisateur U1 sur le message M3 ; et
- le message M4 est affiché en association avec au moins une action ACT4 offerte à l'utilisateur U1 sur le message M4.

Les actions ACT3 et ACT4 sont par exemple représentées par l'interface graphique 3 par des boutons reprenant l'intitulé de ces actions et que l'utilisateur U1 peut sélectionner ou sur lesquels il peut cliquer. Bien entendu d'autres représentations graphiques de ces actions peuvent être envisagées.

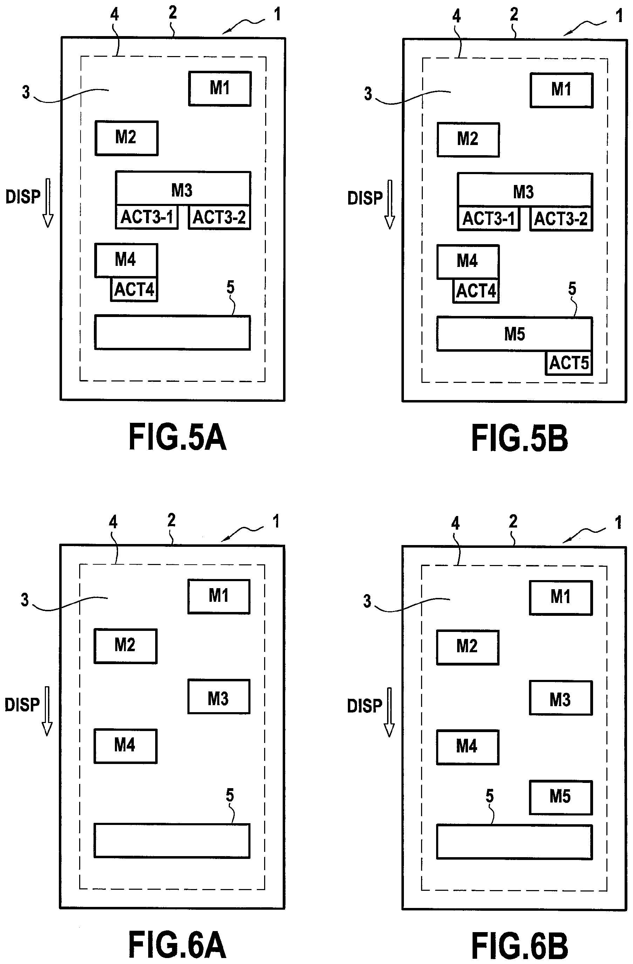

Dans le mode de réalisation décrit ici, comme illustré à la **figure 5A****,** ladite au moins une action ACT3 associée au message M3 comprend une pluralité d'actions et plus précisément les deux actions suivantes :
- une action ACT3-1=« Annuler » qui lorsqu'elle est validée par l'utilisateur U1 conduit à l'annulation du message M3 ; et
- une action ACT3-2=« Envoyer » qui lorsqu'elle est validée par l'utilisateur U1 conduit à l'envoi du message M3 à l'utilisateur U2, même incomplet.

Bien entendu, d'autres types d'actions peuvent être envisagés et configurés au niveau du module d'affichage 3D, éventuellement en un nombre supérieur à deux.

Dans le mode de réalisation décrit ici, le message M3 et les actions ACT3-1 et ACT3-2 qui lui sont associées sont affichés, par rapport au sens d'affichage de la suite de messages échangés entre les utilisateurs U1 et U2 (modélisé par une flèche descendante sur la figure 5A), avant le message M4. Un tel sens d'affichage respecte généralement la chronologie des messages. Selon cette convention, le message M3 apparaît alors comme chronologiquement antérieur au message M4 pour l'utilisateur U1.

Comme mentionné précédemment, le message M4 est affiché par le module d'affichage dans la zone d'affichage 4 en association avec au moins une action ACT4, et plus particulièrement ici avec une unique action « Remonter ». Cette action ACT-4, lorsqu'elle est validée par l'utilisateur U1, conduit à remonter l'affichage du message M4 avant l'affichage du message M3 par rapport au sens d'affichage de la suite de messages échangés entre les utilisateurs U1 et U2 modélisé sur la figure 5A par la flèche. Autrement dit, la validation de cette action par l'utilisateur U1 permet de faire apparaître le message M4 comme chronologiquement antérieur au message M3 pour l'utilisateur U1.

Suite à cet affichage, l'utilisateur U1 peut continuer de saisir dans la fenêtre de composition 5 un nouveau message M5 à destination de l'utilisateur U2 (réponse oui à l'étape E50). Cette saisie peut se faire grâce à l'invention en connaissance de cause du message M2 reçu de l'utilisateur U2. Par exemple, le message M5 est un message dont le contenu est « Oui, on l'a vu avec Manu et c'était incroyable ! ».

Sur détection de cette nouvelle saisie, le module d'affichage 3D associe ici à la fenêtre de composition une action ACT5 (par exemple ACT5= « Envoyer tout ») et déclenche l'affichage de cette action sur l'écran du terminal 1 (étape E60), par exemple dans la fenêtre d'affichage 4 sous la fenêtre de composition 5, comme illustré à la **figure 5B****.** Cette action ACT5, lorsqu'elle est validée par l'utilisateur U1, permet l'envoi du message partiel M3 et du message M5 nouvellement saisi par l'utilisateur U1 à l'utilisateur U2.

L'utilisateur U1 peut alors valider l'une quelconque des actions ACT3, ACT4 et ACT5 affichées sur l'écran 2 de son terminal 1 (étape E70). En réponse à la validation de l'une de ces actions par l'utilisateur U1, le module d'affichage 3D exécute l'action sélectionnée (étape E80).

Les figures 6A à 6E illustrent le résultat à l'écran 2 de la validation des différentes actions proposées à l'utilisateur U1 par le procédé de traitement selon l'invention, ces actions étant exécutées par le module d'affichage 3D de l'interface graphique 3 en réponse à leur validation par l'utilisateur U1. Dans les commentaires accompagnant ces figures, les termes « avant » et « après » se comprennent par rapport au sens d'affichage à l'écran des messages de la suite de messages échangés entre les utilisateurs U1 et U2, illustré sur ces figures par une flèche.

Ainsi, la **figure 6A** illustre l'affichage réalisé par le module d'affichage 3D suite à la sélection (validation) de l'action ACT3-2 = « Envoyer » par l'utilisateur U1. Pour rappel, cette action permet d'envoyer le message partiel M3 à l'utilisateur U2, qui est alors affiché dans la zone d'affichage 4 de l'écran 2 du terminal 1 entre les messages M2 et M4 reçus de l'utilisateur U2.

La **figure 6B** illustre l'affichage réalisé par le module d'affichage 3D suite à la sélection (validation) de l'action ACT5 = « Envoyer tout » par l'utilisateur U1. Pour rappel, cette action permet d'envoyer à l'utilisateur U2 le message partiel M3 et le message M5 composé par l'utilisateur U1 suite à la réception du message M4. Le message M3 est alors affiché par le module d'affichage 3D dans la zone d'affichage 4 de l'écran 2 du terminal 1 entre les messages M2 et M4 reçus de l'utilisateur U2, et le message M5 après le message M4.

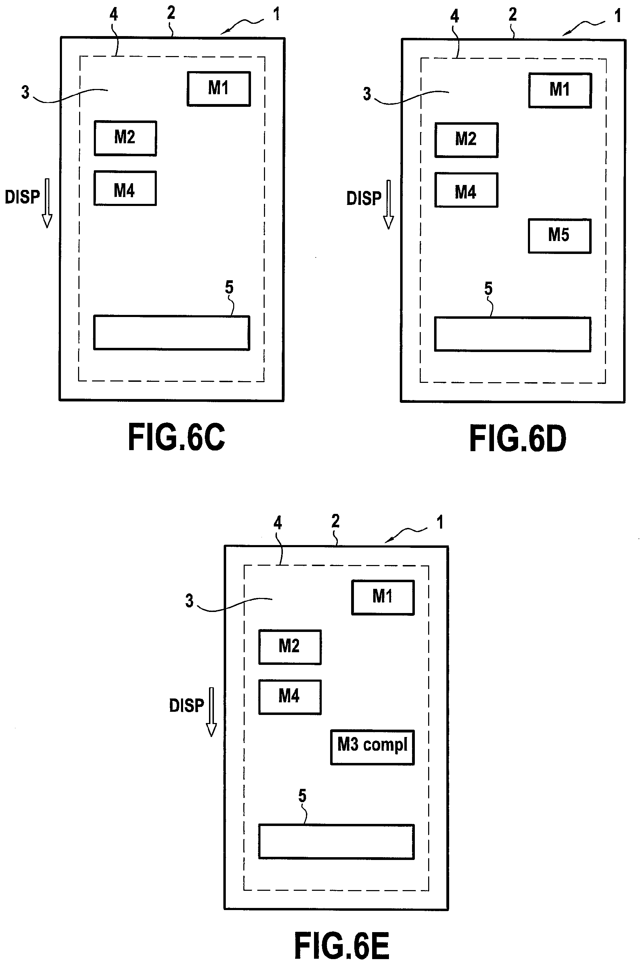

La **figure 6C** illustre l'affichage réalisé par le module d'affichage 3D suite à la sélection (validation) de l'action ACT3-1 = « Annuler » par l'utilisateur U1. Pour rappel, cette action permet d'inhiber l'envoi à l'utilisateur U2 du message partiel M3. Les messages M1, M2 et M4 sont alors affichés dans la zone d'affichage 4 de l'écran 2 du terminal 1 dans l'ordre chronologique de leur émission par le terminal 1 (message M1) et de leur réception par le terminal 1 (messages M2 et M4). Un message M5 composé par l'utilisateur U1 suite à la réception du message M4 est alors affiché après le message M4, comme illustré à la **figure 6D****.** Le message M3 n'est plus affiché dans la suite des messages, celui-ci ayant été annulé précédemment par l'utilisateur M1.

La **figure 6E** illustre l'affichage réalisé par le module d'affichage 3D suite à la sélection (validation) de l'action ACT4 = « Remonter » par l'utilisateur U1. Pour rappel, cette action permet d'afficher dans la zone d'affichage 4 en dehors de la fenêtre de composition 5 le message M4 reçu de l'utilisateur U2 et de réafficher dans la fenêtre de composition 5 le message partiel M3, de sorte à permettre à l'utilisateur U1 de terminer son message (moyennant éventuellement un ajustement de son contenu). Autrement dit, cette action a pour effet d'inhiber la création d'un nouveau message distinct du message M3 lorsque l'utilisateur U1 souhaite compléter le message M3 qu'il avait entrepris de composer lorsqu'il a reçu le message M4 de l'utilisateur U2. La réponse de l'utilisateur U1 au message M2 est ainsi comprise dans un unique message M3.

Bien entendu, les actions prédéterminées ACT3 à ACT5 peuvent être complétées et/ou remplacées par d'autres actions offertes à l'utilisateur U1 sur les messages M3 à M5.

Il convient de noter que les affichages résultant de l'exécution des actions validées par l'utilisateur U1 sont préférentiellement réalisés dans la zone d'affichage 4 et le cas échéant dans la fenêtre de composition 5 en remplacement des affichages présentés sur les figures 5A et 5B, autrement dit des affichages des premier, deuxième et le cas échéant troisième message en association avec les actions qui leur sont attachées.

## Revendications

1. Procédé de traitement de messages échangés entre un premier utilisateur (U1) et au moins un deuxième utilisateur, ce procédé comprenant :
- une étape de détection (E10) d'une composition d'un premier message (M3) par le premier utilisateur dans une fenêtre de composition (5) de messages affichée sur un écran (2) d'un terminal (1) du premier utilisateur ;
- une étape de détection (E20), au cours de cette composition, d'une arrivée d'un deuxième message (M4) pour le premier utilisateur en provenance dudit au moins un deuxième utilisateur ;
- en réponse à la détection de l'arrivée du deuxième message, une étape d'interruption (E30) de la composition du premier message, les éléments saisis par l'utilisateur entre ladite détection de composition de premier message et ladite détection d'arrivée du deuxième message constituant une première partie de message;
- une saisie (E50) du premier utilisateur dans la fenêtre de composition suite à cette interruption entraînant la création d'un troisième message (M5) destiné à contenir les éléments saisis par l'utilisateur après la détection de l'arrivée du deuxième message, ce troisième message (M5) constituant une deuxième partie de message,
- lesdits éléments saisis par l'utilisateur d'une part avant la détection de l'arrivée du deuxième message et d'autre part après la détection de l'arrivée du deuxième message étant ainsi scindés en ladite première partie de message et en ladite deuxième partie de message ; et
- une étape d'affichage (E40) sur l'écran du terminal du premier message (M3) et du deuxième message (M4), chaque message étant affiché sur l'écran en dehors de la fenêtre de composition (5) et en association avec au moins une action prédéterminée (ACT3,ACT4) pouvant être validée par le premier utilisateur.

2. Procédé selon la revendication 1 dans lequel lors de l'étape d'affichage (E40), le premier message est affiché avec ladite au moins une action qui lui est associée avant le deuxième message et ladite au moins une action qui lui est associée par rapport à un sens d'affichage d'une suite de messages échangés entre le premier utilisateur et ledit au moins un deuxième utilisateur.

3. Procédé selon la revendication 1 ou 2 dans lequel ladite au moins une action prédéterminée (ACT3) associée au premier message comprend :
- une annulation (ACT3-1) du premier message ; et
- un envoi (ACT3-2) du premier message audit au moins un deuxième utilisateur.

4. Procédé selon l'une quelconque des revendications 1 à 3 dans lequel ladite au moins une action (ACT4) prédéterminée associée au deuxième message comprend un affichage du deuxième message (M4) dans la zone d'affichage en dehors de la fenêtre de composition et un affichage du premier message dans la fenêtre de composition de sorte à permettre au premier utilisateur de terminer la composition du premier message.

5. Procédé selon l'une quelconque des revendications 1 à 3 comprenant :
- suite à l'interruption du premier message, une étape de composition (E50) dans la fenêtre de composition d'un troisième message (M5) par le premier utilisateur ; et
- une étape d'affichage (E60) d'une action (ACT5) associée au troisième message permettant l'envoi du premier message et du troisième message audit au moins un deuxième utilisateur.

6. Procédé selon la revendication 5 dans lequel le procédé comprend, en réponse à la validation de l'action associée au troisième message par le premier utilisateur :
- le premier message (M3) est affiché sur l'écran en dehors de la fenêtre de composition (5) et avant le deuxième message (M4) par rapport au sens d'affichage d'une suite de messages échangés entre le premier utilisateur et ledit au moins un deuxième utilisateur ; et
- le troisième message (M5) est affiché sur l'écran en dehors de la fenêtre de composition après le deuxième message (M4) par rapport au sens d'affichage de la suite de messages.

7. Programme d'ordinateur comportant des instructions pour l'exécution des étapes du procédé de traitement selon l'une quelconque des revendications 1 à 6 lorsque ledit programme est exécuté par un ordinateur.

8. Support d'enregistrement lisible par un ordinateur sur lequel est enregistré un programme d'ordinateur comprenant des instructions pour l'exécution des étapes du procédé de traitement selon l'une quelconque des revendications 1 à 6.

9. Dispositif (3) de traitement de messages échangés entre un premier utilisateur et au moins un deuxième utilisateur, ce dispositif comprenant :
- un premier module de détection (3A), configuré pour détecter une composition d'un premier message (M3) par le premier utilisateur dans une fenêtre de composition de messages affichée sur un écran (2) d'un terminal (1) du premier utilisateur ;
- un deuxième module de détection (3B), configuré pour détecter au cours de cette composition, une arrivée d'un deuxième message (M4) pour le premier utilisateur en provenance dudit au moins un deuxième utilisateur ;
- un module d'interruption (3C), activé en réponse à la détection de l'arrivée du deuxième message par le deuxième module de détection, et configuré pour interrompre la composition du premier message, les éléments saisis par l'utilisateur entre ladite détection de composition de premier message et la détection de l'arrivée du deuxième message constituant une première partie de message, une saisie du premier utilisateur dans la fenêtre de composition suite à cette interruption entraînant la création d'un troisième message destiné à contenir les éléments saisis par l'utilisateur après la détection de l'arrivée du deuxième message, ce troisième message (M5) constituant une deuxième partie de message,, ledit module d'interruption (3C) étant ainsi configuré pour scinder lesdits éléments saisis par l'utilisateur d'une part avant la détection de l'arrivée du deuxième message et d'autre part après la détection de l'arrivée du deuxième message en ladite première partie de message et en ladite deuxième partie de message ; et
- un module d'affichage (3D) configuré pour afficher sur l'écran du terminal le premier message et le deuxième message, chaque message étant affiché par le module d'affichage en dehors de la fenêtre de composition et en association avec au moins une action prédéterminée (ACT3,ACT4) pouvant être validée par le premier utilisateur.

10. Interface graphique (3) implémentée sur un terminal (1) d'un premier utilisateur comprenant un dispositif de traitement de messages selon la revendication 9.

11. Terminal (1) comprenant une interface graphique (3) selon la revendication 10.

## Patentansprüche

1. Verfahren zur Verarbeitung von zwischen einem ersten Benutzer (U1) und mindestens einem zweiten Benutzer ausgetauschten Nachrichten, wobei dieses Verfahren enthält:
- einen Schritt der Erfassung (E10) einer Erstellung einer ersten Nachricht (M3) durch den ersten Benutzer in einem Erstellungsfenster (5) von Nachrichten, das auf einem Bildschirm (2) eines Endgeräts (1) des ersten Benutzer angezeigt wird;
- einen Schritt der Erfassung (E20), während dieser Erstellung, einer Ankunft einer zweiten Nachricht (M4) für den ersten Benutzer vom mindestens einen zweiten Benutzer;
- als Antwort auf die Erfassung der Ankunft der zweiten Nachricht, einen Schritt des Unterbrechens (E30) der Erstellung der ersten Nachricht, wobei die vom Benutzer zwischen der Erstellungserfassung der ersten Nachricht und der Ankunftserfassung der zweiten Nachricht eingegebenen Elemente einen ersten Nachrichtenteil bilden;
- eine Eingabe (E50) des ersten Benutzers im Erstellungsfenster nach dieser Unterbrechung, die die Erzeugung einer dritten Nachricht (M5) nach sich zieht, die dazu bestimmt ist, die vom Benutzer nach der Erfassung der Ankunft der zweiten Nachricht eingegebenen Elemente zu enthalten, wobei diese dritte Nachricht (M5) einen zweiten Nachrichtenteil bildet,
- wobei die vom Benutzer einerseits vor der Erfassung der Ankunft der zweiten Nachricht und andererseits nach der Erfassung der Ankunft der zweiten Nachricht eingegebenen Elemente somit in den ersten Nachrichtenteil und den zweiten Nachrichtenteil zerlegt werden; und
- einen Schritt der Anzeige (E40) der ersten Nachricht (M3) und der zweiten Nachricht (M4) auf dem Bildschirm des Endgeräts, wobei jede Nachricht auf dem Bildschirm außerhalb des Erstellungsfenster (5) und zusammen mit mindestens einer vorbestimmten Aktion (ACT3, ACT4) angezeigt wird, die vom ersten Benutzer validiert werden kann.

2. Verfahren nach Anspruch 1, wobei im Anzeigeschritt (E40) die erste Nachricht mit der mindestens einen ihr zugeordneten Aktion vor der zweiten Nachricht und der mindestens einen ihr zugeordneten Aktion bezüglich einer Anzeigerichtung einer Folge von zwischen dem ersten Benutzer und dem mindestens einen zweiten Benutzer ausgetauschten Nachrichten angezeigt wird.

3. Verfahren nach Anspruch 1 oder 2, wobei die der ersten Nachricht zugeordnete mindestens eine vorbestimmte Aktion (ACT3) enthält:
- ein Abbrechen (ACT3-1) der ersten Nachricht; und
- ein Senden (ACT3-2) der ersten Nachricht an den mindestens einen zweiten Benutzer.

4. Verfahren nach einem der Ansprüche 1 bis 3, wobei die der zweiten Nachricht zugeordnete mindestens eine vorbestimmte Aktion (ACT4) eine Anzeige der zweiten Nachricht (M4) in der Anzeigezone außerhalb des Erstellungsfensters und eine Anzeige der ersten Nachricht im Erstellungsfenster enthält, um dem ersten Benutzer zu ermöglichen, die Erstellung der ersten Nachricht zu beenden.

5. Verfahren nach einem der Ansprüche 1 bis 3, das enthält:
- nach der Unterbrechung der ersten Nachricht einen Schritt der Erstellung (E50) einer dritten Nachricht (M5) durch den ersten Benutzer im Erstellungsfenster; und
- einen Schritt der Anzeige (E60) einer der dritten Nachricht zugeordneten Aktion (ACT5), die das Senden der ersten Nachricht und der dritten Nachricht an den mindestens einen zweiten Benutzer erlaubt.

6. Verfahren nach Anspruch 5, wobei das Verfahren als Antwort auf die Validierung der der dritten Nachricht zugeordneten Aktion durch den ersten Benutzer enthält:
- die erste Nachricht (M3) wird auf dem Bildschirm außerhalb des Erstellungsfensters (5) und vor der zweiten Nachricht (M4) bezüglich der Anzeigerichtung einer Folge von zwischen dem ersten Benutzer und dem mindestens zweiten Benutzer ausgetauschten Nachrichten angezeigt; und
- die dritte Nachricht (M5) wird auf dem Bildschirm außerhalb des Erstellungsfensters nach der zweiten Nachricht (M4) bezüglich der Anzeigerichtung der Folge von Nachrichten angezeigt.

7. Computerprogramm, das Anweisungen zur Ausführung der Schritte des Verarbeitungsverfahrens nach einem der Ansprüche 1 bis 6 aufweist, wenn das Programm von einem Computer ausgeführt wird.

8. Computerlesbarer Aufzeichnungsträger, auf dem ein Computerprogramm aufgezeichnet ist, das Anweisungen zur Ausführung der Schritte des Verarbeitungsverfahrens nach einem der Ansprüche 1 bis 6 enthält.

9. Vorrichtung (3) zur Verarbeitung von Nachrichten, die zwischen einem ersten Benutzer und mindestens einem zweiten Benutzer ausgetauscht werden, wobei diese Vorrichtung enthält:
- ein erstes Erfassungsmodul (3A), das konfiguriert ist, eine Erstellung einer ersten Nachricht (M3) durch den ersten Benutzer in einem Erstellungsfenster von Nachrichten zu erfassen, das auf einem Bildschirm (2) eines Endgeräts (1) des ersten Benutzer angezeigt wird;;
- ein zweites Erfassungsmodul (3B), das konfiguriert ist, während dieser Erstellung eine Ankunft einer zweiten Nachricht (M4) für den ersten Benutzer vom mindestens einen zweiten Benutzer zu erfassen;
- ein Unterbrechungsmodul (3C), das als Antwort auf die Erfassung der Ankunft der zweiten Nachricht durch das zweite Erfassungsmodul aktiviert wird, und konfiguriert ist, die Erstellung der ersten Nachricht zu unterbrechen, wobei die vom Benutzer zwischen der Erfassung der Erstellung der ersten Nachricht und der Erfassung der Ankunft der zweiten Nachricht eingegebenen Elemente einen ersten Nachrichtenteil bilden, wobei eine Eingabe des ersten Benutzers in das Erstellungsfenster nach dieser Unterbrechung die Erzeugung einer dritten Nachricht nach sich zieht, die dazu bestimmt ist, die vom Benutzer nach der Erfassung der Ankunft der zweiten Nachricht eingegebenen Elemente zu enthalten, wobei diese dritte Nachricht (M5) einen zweiten Nachrichtenteil bildet, wobei das Unterbrechungsmodul (3C) somit konfiguriert ist, die vom Benutzer einerseits vor der Erfassung der Ankunft der zweiten Nachricht und andererseits nach der Erfassung der Ankunft der zweiten Nachricht eingegebenen Elemente in den ersten Nachrichtenteil und den zweiten Nachrichtenteil zu zerlegen; und
- ein Anzeigemodul (3D), das konfiguriert ist, auf dem Bildschirm des Endgeräts die erste Nachricht und die zweite Nachricht anzuzeigen, wobei jede Nachricht vom Anzeigemodul außerhalb des Erstellungsfensters und zusammen mit mindestens einer vorbestimmten Aktion (ACT3, ACT4) angezeigt wird, die vom ersten Benutzer validiert werden kann.

10. Graphische Schnittstelle (3), die auf einem Endgerät (1) eines ersten Benutzers implementiert ist, das eine Vorrichtung zur Verarbeitung von Nachrichten nach Anspruch 9 enthält.

11. Endgerät (1), das eine graphische Schnittstelle (3) nach Anspruch 10 enthält.

## Claims

1. Method for processing messages exchanged between a first user (U1) and at least one second user, this method comprising:
- a step (E10) of detecting the composing of a first message (M3) by the first user in a message composition window (5) displayed on a screen (2) of a terminal (1) of the first user;
- a step (E20) of detecting, during this composing, the arrival of a second message (M4) for the first user from said at least one second user;
- in response to the detection of the arrival of the second message, a step (E30) of interrupting the composing of the first message, the elements input by the user between said detection of the composing of the first message and said detection of the arrival of the second message forming a first message part;
- an input (E50) by the first user in the composition window after this interruption resulting in the creation of a third message (M5), which is intended to contain the elements input by the user after the detection of the arrival of the second message, this third message (M5) forming a second message part,
- said elements input by the user before the detection of the arrival of the second message and after the detection of the arrival of the second message thus being split into said first message part and said second message part; and
- a step (E40) of displaying the first message (M3) and the second message (M4) on the screen of the terminal, each message being displayed on the screen outside of the composition window (5) and in association with at least one predetermined action (ACT3, ACT4) that can be confirmed by the first user.

2. Method according to Claim 1, wherein, during the displaying step (E40), the first message is displayed together with said at least one action associated therewith before the second message and said at least one action associated therewith relative to a display direction of a series of messages exchanged between the first user and said at least one second user.

3. Method according to Claim 1 or 2, wherein said at least one predetermined action (ACT3) associated with the first message comprises:
- cancelling (ACT3-1) the first message; and
- sending (ACT3-2) the first message to said at least one second user.

4. Method according to any one of Claims 1 to 3, wherein said at least one predetermined action (ACT4) associated with the second message comprises displaying the second message (M4) in the display zone outside of the composition window and displaying the first message in the composition window so as to allow the first user to finish composing the first message.

5. Method according to any one of Claims 1 to 3, comprising:
- after the interruption of the first message, a step (E50) in which the first user composes a third message (M5) in the composition window; and
- a step (E60) of displaying an action (ACT5) associated with the third message, allowing the first message and the third message to be sent to said at least one second user.

6. Method according to Claim 5, wherein the method comprises, in response to the first user confirming the action associated with the third message:
- displaying the first message (M3) on the screen outside of the composition window (5) and before the second message (M4) relative to the display direction of a series of messages exchanged between the first user and said at least one second user; and
- displaying the third message (M5) on the screen outside of the composition window after the second message (M4) relative to the display direction of the series of messages.

7. Computer program including instructions for carrying out the steps of the processing method according to any one of Claims 1 to 6 when said program is executed by a computer.

8. Computer-readable recording medium on which there is recorded a computer program comprising instructions for carrying out the steps of the processing method according to any one of Claims 1 to 6.

9. Device (3) for processing messages exchanged between a first user and at least one second user, this device comprising:
- a first detection module (3A), which is configured to detect the composing of a first message (M3) by the first user in a message composition window displayed on a screen (2) of a terminal (1) of the first user;
- a second detection module (3B), which is configured to detect, during this composing, the arrival of a second message (M4) for the first user from said at least one second user;
- an interruption module (3C), which is activated in response to the detection of the arrival of the second message by the second detection module and is configured to interrupt the composing of the first message, the elements input by the user between said detection of the composing of the first message and the detection of the arrival of the second message forming a first message part, an input by the first user in the composition window after this interruption resulting in the creation of a third message, which is intended to contain the elements input by the user after the detection of the arrival of the second message, this third message (M5) forming a second message part, said interruption module (3C) thus being configured to split said elements input by the user before the detection of the arrival of the second message and after the detection of the arrival of the second message into said first message part and said second message part; and
- a display module (3D), which is configured to display the first message and the second message on the screen of the terminal, each message being displayed by the display module outside of the composition window and in association with at least one predetermined action (ACT3, ACT4) that can be confirmed by the first user.

10. Graphical interface (3) implemented on a terminal (1) of a first user comprising a message-processing device according to Claim 9.

11. Terminal (1) comprising a graphical interface (3) according to Claim 10.
